Europäisches Patentamt

European Patent Office

Office européen des brevets

(19)

(11) Veröffentlichungsnummer: **0 219 649**
**B1**

(12) **EUROPÄISCHE PATENTSCHRIFT**

(45) Veröffentlichungstag der Patentschrift: **02.05.90**

(51) Int. Cl.⁵: **H 05 B 7/06, H 05 B 3/03**

(21) Anmeldenummer: **86111684.6**

(22) Anmeldetag: **22.08.86**

(54) **Kontaktelektrodenanordnung für Gleichstrom-Lichtbogen- oder Widerstands-Schmelzofen.**

(30) Priorität: **05.10.85 DE 3535690**

(43) Veröffentlichungstag der Anmeldung:
**29.04.87 Patentblatt 87/18**

(45) Bekanntmachung des Hinweises auf die
Patenterteilung:
**02.05.90 Patentblatt 90/18**

(84) Benannte Vertragsstaaten:
**AT CH DE FR GB IT LI SE**

(56) Entgegenhaltungen:
**EP-A-0 058 817**
**EP-A-0 133 931**
**FR-A- 393 740**
**FR-A-2 418 433**

(73) Patentinhaber: **MAN Gutehoffnungshütte**
**Aktiengesellschaft**
**Bahnhofstrasse, 66 Postfach 11 02 40**
**D-4200 Oberhausen 11 (DE)**

(72) Erfinder: **Guido, Heinz**
**Albert Schweitzer Strasse 28**
**D-4100 Duisburg 25 (DE)**

Courier Press, Leamington Spa, England.

Beschreibung

Die Erfindung betrifft eine austauschbare Kontaktelektrodenanordnung eines Gleichstrom-Lichtbogen- oder Widerstands-Schmelzofens, bestehend aus einer auf dem Rand einer Öffnung des Ofengefäßbodens aufliegenden Tragplatte, mit unterhalb im Abstand davon angebrachter Basisplatte mit an ihr festigten Kontaktstäben sowie unterhalb der Basisplatte trennbar angeordneten Strom- und Kühlmittelleitungen.

Aufbau und Wirkungsweise der im Oberbegriff genannten Schmelzöfen sind hinreichend bekannt. Die Erfindung geht entsprechend dem Oberbegriff des Patentspruches von einer aus der EP—A1—0 058 817 bekannten Kontaktelektrodenanordnung aus. Bei der bekannten Anordnung sind die in die Ofenausmauerung hineinragenden und im Bereich des Ofenherdes endenden Kontaktstäbe mit ihren Hälsen mit der Basisplatte verschweißt oder mit Hilfe einer Klemm- oder Schraubvorrichtung mit der Basisplatte verbunden. Die Basisplatte wird mit Hilfe von Bolzen mit der Tragplatte verbunden, die lösbar an der Unterseite des Ofengefäßes angeordnet ist. Die Strom- und Kühlmittelzufuhrleitungen sind an die Basisplatte angebaut.

Des weiteren wird auf die nicht vorveröffentlichte EP—A1—0 219 650 verwiesen, in der eine austauschbare Kontaktelektroden-Baueinheit beschrieben ist, bei der die Kontaktelektrode mittels Schablone als Block mit feuerfestem Material ausgestampft und als austauschbare Baueinheit mittels Hebeeinrichtungen in eine Öffnung im Ofengefäßboden abgesenkt wird, so daß die Kontaktelektrode mit ihrer Trageplatte auf dem Rand des Ofengefäßbodens aufsitzt. Der Ringspalt zwischen der Ofenbodenausmauerung und der Kontaktelektrode wird ausgestampft. Die Stromkabel un Kühlmittelleitungen werden an Befestigungseinrichtungen angebracht.

Wenn nach entsprechender Betriebszeit die Kontaktstäbe verbraucht sind, wird anstelle des Auswechselns einzelner Kontaktstäbe die komplette Kontaktelektroden-Baueinheit mittels Druckelementen aus ihrem Sitz im Ofengefäßboden gelöst, angehoben und anschließend von Hebeeinrichtungen, die an Tragmittel der Kontaktelektroden-Baueinheit angeschlagen werden, nach oben aus dem Ofengefäß herausgezogen.

Zur Vorbereitung des Kontaktelektrodenwechsels ist es notwendig, die Stromkabel und die Kühlmittelleitungen von den Befestigungen der Kontaktelektrode zur lösen. Dieser Arbeitsweise haftet der Mangel an, daß die Stromkabel und auch die Kühlmitteleitungen infolge ihres Gewichtes schwer handhabbar sind. Handelt es sich un große Schemlzofeneinheiten, so werden für diese Arbeiten sogar besondere Montage- und Demontagegeräte benötigt. Außerdem sind die ergonomischen Bedingungen im betreffenden Arbeitsbereich sehr ungünstig, da die Wärmestrahlung des Schmelzofens die Arbeit des Personals erschwert.

Bei der Kühlanordnung einer Bodenelektrode für einen Gleichstromlichtbogenofen nach der EP—A1—0 133 931 wird eine einzige Bodenelektrode von einer sog. Kontakthülse gehalten. Die Bodenelektrode ist mit der Kontakthülse lösbar verbunde. In der Wandung der Kontakthülse verlaufen Kühlkanäle zur Flüssigkeitskühlung. Die elektrische Stromzuführung die Bodenelektrode ist mit der Kontakthülse verbunden.

Aufgabe der Erfindung ist es, die Arbeiten zum Befestigen oder Lösen der Stromkabel un Kühlmittelleitungen an der Kontaktelektrode zu vereinfachen, zu beschleunigen und in ergonomischer Hinsicht zu verbessern.

Diese Aufgabe wird nach der Erfindung durch Maßnahmen gelöst, wie sie im Patentanspruch angegeben sind. Danach ist ein Terminal vorgesehen, der die Strom- und Kühlmittelleitungen aufnimmt und der unterhalb der Basisplatte an der Randversteifung an der Öffnung des Ofengefäßbodens angeordnet ist. Zwischen Terminal und Basisplatte ist eine Trennstelle für die Strom- und Kühlmittelleitungen vorgesehen. Die Verbindung der der Strom- und Kühlmittelzuführung an der Trennstelle kann eine Schraub-, Klemm- oder Keilverbindung sein. Der Terminal ist unter Zwischenschaltung einer isolierung an der Randversteifung am Ofengefäßboden befestigt.

Durch die erfindungsgemäßen Maßnahmen wird erreicht, daß beim Wechsel der Kontaktelektrode nunmehr zur Trennung von Stromkabeln und Kühlmittelleitungen von der Kontaktelektrode lediglich die Leitungsverbindung an der Trennstelle oberhalb des Terminals gelöst werden muß. Beim Ausbau der Kontaktelektroden-Baueinheit verbleiben daher Stromkabel un Kühlmittelleitungen an dem an der Randversteifung des Ofengefäßbodens befestigten Terminal.

An hand der schematischen Zeichnungen werden Einzelheiten der Erfindung nachstehend näher erläutert.

Es seigen;

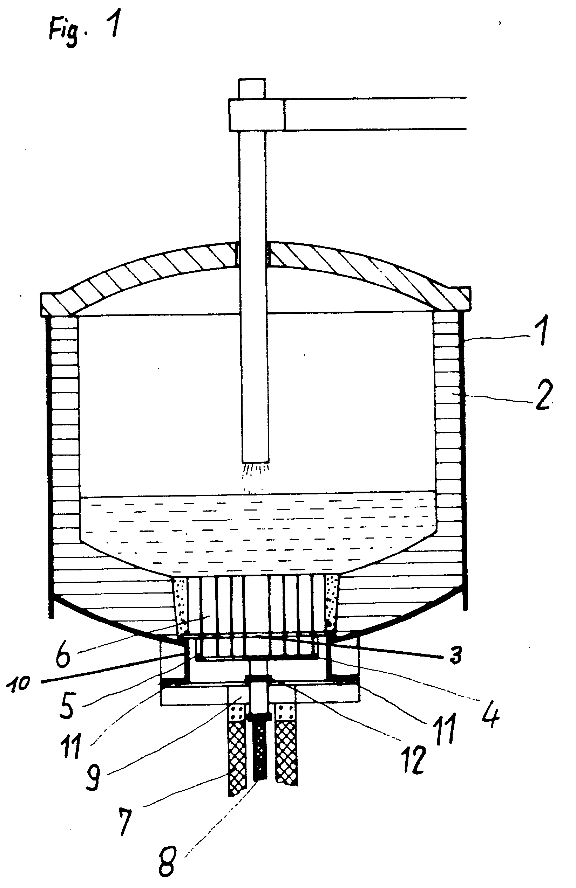

Fig. 1 einen Schnitt durch ein Lichtbogen-Ofengefäß mit Kontaktelektroden-Anordnung im Betreibszustand,

Fig. 2 einen Schnitt durch ein Lichtbogen-Ofengefäß bei ausgeschwenktem Ofendeckel und vor dem Wechsel der Kontaktelektrode.

Das in den Figuren dargestellte Ofengefäß eines Gleichstrom-Lichtbogenofens besitzt einen Stahlmantel une einen stählernen Gefäßboden (1). Das Ofengefäß ist mit einer feuerfesten Ausmauerung (2) versehen. Unterhalb des Ofenherdes, d.h. im Bereich des Ofenbodens unterhalb einer Öffnung desselben, ist eine Basisplatte (4) angebracht, wobei zwischen der Basisplatte (4) und der auf dem Rand der Öffnung des Ofenbodens aufliegenden Tragplatte (3) ein Zwischenraum geschaffen ist. Dieser Zwischenraum wird mit Kühlmittel, z.B. Luft, durchströmt. An der Basisplatte (4) sind mehrere kontakstäbe (5) befestigt, die im Bereich des Zwischenraumes gekühlt werden und mit ihrem übrigen Teil in die feuerfeste Ausstampfung (6) eingebettet sind und bis zur Schmelze reichen. Die Kontaktstäbe (5) bestehen aus Metall, vorzugsweise aus einem dem Schemlzgut ähnlichen Werkstoff. Der Boden des Ofengefäßes (1) weist eine Randversteifung (10) auf.

Die Stromkabel (7) und die Kühlmittelleitungen (8) sind am Terminal (9) befestigt, der seinerseits an der Randversteifung (10) des Gefäßbodens befestigt ist. An den Befestigungspunkten des Terminals (9) an der Randversteifung (10) ist eine Isolierung (11) angeordnet, wobei selbstverständlich auch die Befestigungsmittel isoliert sind.

Zwischen Terminal (9) und Basisplatte (4) ist, wie aus den Patentfiguren ersichtlich, die Kühlmittelleitung (8) gleichzeitig als Stromzuführung ausgebildet.

Die Kontaktverbindung an der Trennstellte (12) zwischen dem Terminal (9) und der Basisplatte (4) ist so hergestellt, daß eine schnelle Lösbarkeit gewährleistet ist. Dies kann geschehen durch Verschrauben, Verkeilen oder Verklemmen.

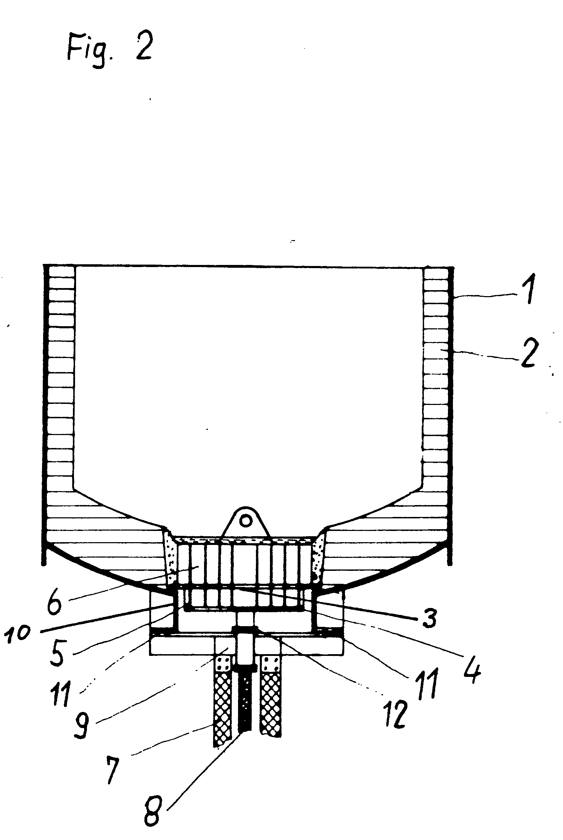

Fig. 2 zeigt das Ofengefäß mit ausgeschwenkten (nicht dargestellten) Ofendeckel vor dem Auswechseln der Kontaktelektrode. Die Kontaktstäbe (5) sind entsprechend abgebrannt. In die Restschmelze ist eine Tragöse eingesetzt, an der die Kontaktelektrode nach oben herausgezogen wird. Vor dem Auswechseln der Kontaktelektrode werden an der Trennstelle (12) des Terminals (9) die Verbindungen der Strom- und Kühlmittelleitungen zur Kontaktelektrode hin gelöst, während die Leitungen (7, 8) am terminal (9), der seinerseits an der Randversteifung (10) des Ofengefäßes (1) befestigt ist, verbleiben.

**Patentanspruch:**

Austauschbare Kontaktelektrodenanordnung eines Gleichstrom-Lichtbogen- oder Widerstands-Schmelzofens, bestehend aus einer auf dem Rand einer Öffnung des Ofengefäßbodens (1) aufliegenden Tragplatte (3), mit unterhalb in Abstand davon angebrachter Basisplatte (4) mit an ihr befestigten Kontaktstäben (5) sowie unterhalb der Basisplatte (4) trennbar angeordneten Strom- und Kühlmittelleitungen (7, 8), dadurch gekennzeichnet, daß die Trennstelle (12) zur Herstellung der Leitungsverbindung der Strom- und Kühlmittelleitungen (7, 8) mit der Kontaktelektrodenanordnung unterhalb der Basisplatte (4) und oberhalb eines Terminals (9), der die Strom- und Kühlmittelleitungen (7, 8) aufnimmt, angeordnet ist, wobei der Terminal (9) an der Randversteifung (10) an der Öffnung des Ofengefäßbodens (1) lösbar befestigt und gegenüber der Randversteifung (10) isoliert ist und daß die Leitungsverbindung an der Trennstelle (12) durch Verschrauben, Verklemmen oder Verkeilen erfolgt.

**Revendication**

Dispositif de montage interchangeable d'électrode de contact d'un four de fusion à arc à courant contnu ou à résistance, comportant une plaque d'appui (3), s'appliquant sur le bord d'une ouverture du fond (1) de creuset du four, avec un plaque de base (4) montée à distance au-dessous de cette plaque et muni de barres de contact (5) fixées à la plaque de base et avec également, montés séparables au-dessous de cette plaque de base (4), des câbles de courant et des canalisations de refroidissement, dispositif de montage caractérisé en ce que le section de séparation (12) pour réaliser le raccordement des câbles (7, 8) de courant et des canalisations de refroidissement avec le dispositif de montage de l'électrode de contact est prévue au-dessous de la plaque de base (4) et au-dessus d'un terminal (9) qui reçoit les câbles (7, 8) de courant et les canalisations de refroidissement, ce terminal (9) étant fixé de façon amovible au renforcement de bord (10) prévu à l'endroit de l'ouverture du fond (1) du creuset du four et étant isolé par rapport à ce renforcement de bord (10), et en ce que le raccordement des câbles à la section de séparation (12) est effectué par vissage, encliquetage ou clavetage.

**Claim**

Exchangeable contact electrode arrangement of a dc arc or electric resistance furnace, consisting of a support plate (3) lying on the rim of an opening of the furnace base (1), a base plae (4) provided at a spacing therebelow and with contact rods (5) fixed to the base plate (4), and lines for current and coolant separably arranged below the base plate (4), characterised in the separation position (12) for establishing the line connection between the current and coolant lines and the contact electrode arrangement is arranged below the base plate (4) and above a terminal (9) which is releasably secured to the rim reinforcement (10) of the opening of the furnace base (1) and insulated relative to the rim reinforcement (10), the line connection at the separating position (12) being effected by screwing, clamping or wedging.

Fig. 1

Fig. 2